(19) Europäisches Patentamt / European Patent Office / Office européen des brevets

(11) **EP 3 819 099 B1**

(12) **EUROPEAN PATENT SPECIFICATION**

(45) Date of publication and mention
of the grant of the patent:
**29.03.2023 Bulletin 2023/13**

(21) Application number: **19382973.6**

(22) Date of filing: **07.11.2019**

(51) International Patent Classification (IPC):
*B29C 64/118* (2017.01)      *B29C 64/295* (2017.01)
*B29C 70/38* (2006.01)      *B33Y 30/00* (2015.01)

(52) Cooperative Patent Classification (CPC):
**B29C 64/118; B29C 64/295; B29C 70/38**

(54) **THREE-DIMENSIONAL PRINTING SYSTEM FOR PRINTING AN OBJECT FROM THERMOPLASTIC MATERIAL REINFORCED WITH A CONTINUOUS CARBON FILAMENT**

DREIDIMENSIONALES DRUCKSYSTEM ZUM DRUCKEN EINES GEGENSTANDES AUS MIT EINEM KONTINUIERLICHEN KOHLENSTOFFFILAMENT VERSTÄRKTEM THERMOPLASTISCHEM MATERIAL

SYSTÈME D'IMPRESSION TRIDIMENSIONNELLE POUR IMPRIMER UN OBJET À PARTIR D'UN MATÉRIAU THERMOPLASTIQUE RENFORCÉ PAR UN FILAMENT CONTINU DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.05.2021 Bulletin 2021/19**

(73) Proprietor: **Airbus Operations, S.L.U.**
**28906 Getafe (Madrid) (ES)**

(72) Inventors:
• **BUTRAGUEÑO MARTÍNEZ, Asunción**
**28906 Getafe (ES)**
• **HERNÁIZ LÓPEZ, Guillermo**
**28906 Getafe (ES)**
• **SÁNCHEZ GÓMEZ, José**
**28906 Getafe (ES)**

(74) Representative: **Elzaburu S.L.P.**
**Edificio Torre de Cristal**
**Paseo de la Castellana 259 C, planta 28**
**28046 Madrid (ES)**

(56) References cited:
**WO-A1-2015/077262      US-A1- 2017 129 170**
**US-A1- 2017 348 874**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## Field of the invention

The invention relates to three-dimensional printing, i.e. 3D printing, of reinforced plastics by using Fused Filament Fabrication (FFF) printers. The invention is related with the improvement of quality during the printing process.

## Background of the invention

It's well known that during the manufacturing process of crystalline and semi-crystalline thermoplastic, one of the key parameters to take into account is the cold down rates after the deposition of the material, whatever the used process.

In the case of consolidation in oven or press, said cold down rate could be controlled by conduction or convection in the same equipment where the consolidation is done. However, in the case of 3D printing, this is not as simple:

- The temperature in the printing area, where the printing is done, can't be as high as the printing temperature, due to machine equipment can't support this range of temperatures.
- Crystallinity is produced during the printing process, while the machine is still working on the part.
- The printed material is composed by two different materials, i.e., continuous fibre and polymer, with different thermal conductivity. Continuous fibre means that the fibre extends uninterruptedly.

There are three factors that influence the crystallinity of the final thermoplastic material:

- Difference between thermal coefficients of polymer and fibre.
- Difference between printing area temperature and deposited thermoplastic material.
- Thermal conductivity of the fibre.

In a 3D printing machine of pure polymer, with no reinforcement, there are two temperatures to be controlled:

- Temperature of the nozzle head when printing the polymer: this temperature has to be high enough to allow the material to arrive at the melting condition to ensure the fusion of the filament and the correct deposition.

- Temperature in printing area which correspond to the ambient temperature. It must be controlled to a certain level to allow deposited material to cool in a proper condition to avoid residual strengths which may induce warping and loss of mechanical properties of printed part.

These temperatures become more important as the melting temperature of the thermoplastic material printed is higher than the melting temperature of conventional thermoplastic materials.

As high-performance thermoplastics (e.g. PEEK, PAEK), which are the most promising in terms of aerospace applications, have high melting temperatures, up to 400 °C, the cool down rate and therefore the crystallization become even more important.

According to the above, the polymer is printed at the nozzle head temperature and cold down up to the ambient temperature. This transition will depend on the thermal conductivity of the polymer, the ambient temperature and the speed of the 3D printing machine, considering the nozzle is also indirectly heating up the area where the material is printed.

In a 3D printing machine of continuous fiber and polymer there is another factor to be considered. The thermal conductivity of the fiber that cold down the material as soon as it is printed, transferring the heat to other areas of the printed material, above all when carbon fibers are used due to their high thermal conductivity.

These thermal differences among nozzle, fiber and ambient make more difficult the crystallinity of the thermoplastic material as it is done more quickly as desired.

It is known document US2017129170A1 disclosing a method of fabricating composite articles includes supplying electrical current to an electrically conductive filament. The electrically conductive filament may include a first material that is electrically conductive and a polymer second material. The polymer second material comprises at least one of a thermoplastic polymer and a partially cured thermosetting polymer. The heated filament is deposited according to a predefined pattern in successive layers to adhere the polymer material of the layers together and build up a three dimensional article. The article includes strands of the first material embedded in a substantially continuous polymer matrix of the second material.

## Summary of the invention

It is the object of the invention a three-dimensional printing system that heats the continuous fibre to a certain level that mitigates the effects produced by the loss of temperature.

The printing system object of the invention comprises:

- A printing bed where a printed material is deposited for forming the object. The printed material is, thus, a portion of the printed object while being printed.

- A bobbin configured for holding a filament of thermoplastic material reinforced with a continuous elec-

tically conductive fibre.

- A printing head configured for being fed by the thermoplastic material reinforced with continuous electrically conductive fibre. The printing head is also configured for depositing the printed material onto the printing bed.

- A power supply.

- A pair of first and second electrodes connected to the power supply. The first electrode being electrically connected to the printing bed and the second electrode being electrically connected to the thermoplastic material reinforced with continuous electrically conductive fibre.

According to the above, in operation, an electric circuit is created through the continuous fibre of the thermoplastic material that heats the printed material.

The above system has the following advantages:

- Homogeneous temperature of thermoplastic and fibre during the cooling process to ensure a proper crystallization during printing and once the printing process is finished.

- Avoidance of undesired warping effects.

- Improve mechanical properties of the finished part. This is quite important because continuous fibre is added to tackle structural parts.

- Reducing the temperature differences, the crystallinity of the polymer around the fiber is facilitated and therefore, the mechanical properties of the final composite are also increased.

- To maintain the temperature during printing and also once finished to control the cooling down with the area where the printing is done and with the temperature of the fibre.

Thanks to the Joule effect, the electrically conductive fibre could be heated avoiding the difference of temperature existing during the process between it and the thermoplastic and the ambient temperature.

The printing system object of the invention creates an electric circuit that includes the printed material. Generated heat depends on the following parameters:

$$Q = I^2 \cdot R \cdot t$$

Described additive manufacturing process is printing thermoplastic material reinforced with continuous electrically conductive fibre. Taking advantage precisely of this continuity of the fibre, an electric circuit is created to heat up the fibre by means of electrical power and, as a consequence, to control the fibre temperature and the thermal transference between the printing zone, the rest of the part and the ambient.

The 3D printing machine will apply the thermoplastic material reinforced with continuous fibre over the printing bed building up the part and generating the electric circuit.

During the printing process and by means of Joule effect, fiber will be heated up in order to reduce the loss of temperature, due to the thermal conductivity of the fiber, and increasing or maintaining the temperature similar to the ambient of the area where the nozzle is printing the material.

**Description of the figures**

To complete the description and in order to provide for a better understanding of the invention, a set of drawings is provided. Said drawings form an integral part of the description and illustrate preferred embodiments of the invention. The drawings comprise the following figures.

Figure 1 shows a schematic perspective view of an embodiment of the printing system object of the invention.

Figure 2 shows a schematic lateral view of a second embodiment of the printing system object of the invention.

**Detailed description of the invention**

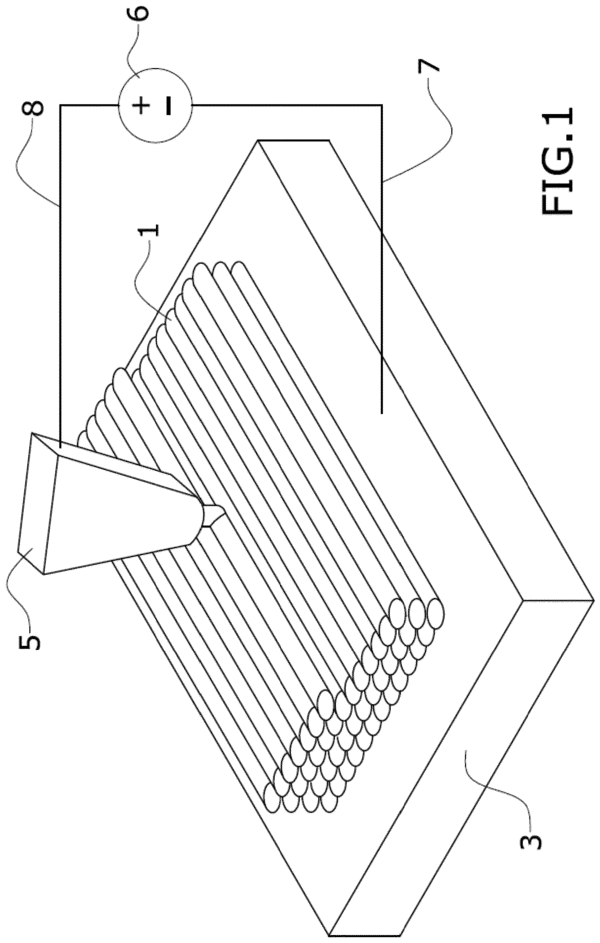

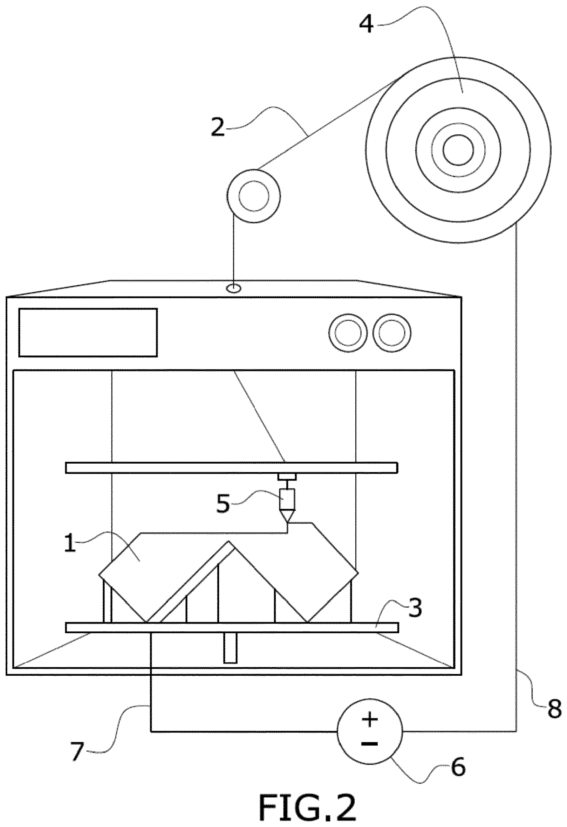

Figures 1 and 2 depict two embodiments of the three-dimensional printing system object of the invention.

Both figures show an object (1) that is being printed and figure 2 specifically shows a filament (2) of thermoplastic material reinforced with continuous electrically conductive fibre.

Figure 1 and 2 shows an object (1) that is being printed, therefore, they show the printed material that is forming the object while being printed.

The printing system comprises:

- a printing bed (3) where the object (1) is being printed,

- a bobbin (4), holding a filament (2) of thermoplastic material reinforced with continuous carbon fibre,

- a printing head (5) fed by the thermoplastic material reinforced with continuous carbon fibre from the bobbin (4) and depositing the printed material onto the printing bed (3),

- a power supply (6),

- a pair of first and second electrodes (7, 8) connected to the power supply (6),

- the first electrode (7) is electrically connected to the printing bed (3),

- the second electrode (8) is electrically connected to the printing head (5) in figure 1 or to the bobbin (4) in figure 2.

In the embodiment shown in figure 2, the printing head (5) is configured for being electrically connected to the thermoplastic material reinforced with continuous electrically conductive fibre filament (2). For instance, the printed head (5) may be conductive or at least the portion of the printed head (5) in contact with the electrode and extending towards a surface of the printing head (5) in contact with the thermoplastic material.

In the embodiment shown in figure 3, the second electrode (8) is electrically connected to the bobbin (4). The bobbin (4) is configured for being electrically connected to the thermoplastic material reinforced with continuous electrically conductive fibre filament (2). As explained above, the bobbin (4) may be conductive or at least the portion of the bobbin (4) in contact with the electrode and extending towards a surface of the bobbin (4) in contact with the thermoplastic material.

The electrically conductive fibre is carbon fibre. Alternatively, the electrically conductive fibre may comprise an electrically conductive coating to make the fibre conductive.

## Claims

1. Three-dimensional printing system for printing an object (1) from a thermoplastic material reinforced with a continuous electrically conductive fibre filament (2), the printing system comprising:

   - a printing bed (3) where a printed material is deposited for forming the object (1),
   - a bobbin (4) holding a filament (2) of thermoplastic material reinforced with continuous electrically conductive fibre,
   - a printing head (5) configured for being fed by the thermoplastic material reinforced with continuous electrically conductive fibre from the bobbin (4) and for depositing the printed material onto the printing bed (3),
   - a power supply (6),
   - a pair of first and second electrodes (7, 8) connected to the power supply (6),
   - the second electrode (8) being electrically connected to the thermoplastic material reinforced with continuous electrically conductive fibre, **characterized in that** the first electrode (7) is electrically connected to the printing bed (3),

such that an electric circuit is created through the continuous fibre of the thermoplastic material to heat the printed material.

2. Three-dimensional printing system for printing an object (1) from a thermoplastic material reinforced with a continuous electrically conductive fibre filament (2), according to claim 1, wherein the second electrode (8) is electrically connected to the printing head (5), the printing head (5) configured for being electrically connected to the thermoplastic material reinforced with continuous electrically conductive fibre filament (2).

3. Three-dimensional printing system for printing an object (1) from a thermoplastic material reinforced with a continuous electrically conductive fibre filament (2), according to claim 1, wherein the second electrode (8) is electrically connected to the bobbin (4), the bobbin (4) configured for being electrically connected to the thermoplastic material reinforced with continuous electrically conductive fibre filament (2).

4. Three-dimensional printing system for printing an object (1) from a thermoplastic material reinforced with a continuous electrically conductive fibre filament (2), according to any preceding claim, wherein the electrically conductive fibre is carbon fibre.

5. Three-dimensional printing system for printing an object (1) from a thermoplastic material reinforced with a continuous electrically conductive fibre filament (2), according to any preceding claim 1 to 3, wherein the electrically conductive fibre comprises an electrically conductive coating.

## Patentansprüche

1. 3D-Drucksystem zum Drucken eines Objekts (1) aus einem thermoplastischen Material, verstärkt mit einem durchgehenden elektrisch leitfähigen Faserfilament (2), wobei das Drucksystem Folgendes umfasst:

   - ein Druckbett (3), auf dem ein gedrucktes Material aufgebracht wird, um das Objekt (1) auszubilden,
   - eine Spule (4), die ein Filament (2) aus thermoplastischem Material hält, das mit durchgehenden elektrisch leitfähigen Fasern verstärkt ist,
   - einen Druckkopf (5), dazu konfiguriert, von der Spule (4) mit dem thermoplastischen Material, das mit durchgehenden elektrisch leitfähigen Fasern verstärkt ist, gespeist zu werden und das gedruckte Material auf das Druckbett (3) aufzubringen,
- eine Spannungsversorgung (6),
- ein Paar aus einer ersten und einer zweiten Elektrode (7, 8), die mit der Spannungsversorgung (6) verbunden sind,
- wobei die zweite Elektrode (8) elektrisch mit dem thermoplastischen Material verbunden ist, das mit durchgehenden elektrisch leitfähigen Fasern verstärkt ist, **dadurch gekennzeichnet, dass** die erste Elektrode (7) elektrisch mit dem Druckbett (3) verbunden ist, sodass ein elektrischer Stromkreis durch die durchgehende Faser des thermoplastischen Materials erzeugt wird, um das gedruckte Material zu erwärmen.

2. 3D-Drucksystem zum Drucken eines Objekts (1) aus einem thermoplastischen Material, verstärkt mit einem durchgehenden elektrisch leitfähigen Faserfilament (2), nach Anspruch 1, wobei die zweite Elektrode (8) elektrisch mit dem Druckkopf (5) verbunden ist, wobei der Druckkopf (5) dazu konfiguriert ist, elektrisch mit dem thermoplastischen Material verbunden zu sein, das mit einem durchgehenden elektrisch leitfähigen Faserfilament (2) verstärkt ist.

3. 3D-Drucksystem zum Drucken eines Objekts (1) aus einem thermoplastischen Material, verstärkt mit einem durchgehenden elektrisch leitfähigen Faserfilament (2), nach Anspruch 1, wobei die zweite Elektrode (8) elektrisch mit der Spule (4) verbunden ist, wobei die Spule (4) dazu konfiguriert ist, elektrisch mit dem thermoplastischen Material verbunden zu sein, das mit einem durchgehenden elektrisch leitfähigen Faserfilament (2) verstärkt ist.

4. 3D-Drucksystem zum Drucken eines Objekts (1) aus einem thermoplastischen Material, verstärkt mit einem durchgehenden elektrisch leitfähigen Faserfilament (2), nach einem der vorhergehenden Ansprüche, wobei die elektrisch leitfähige Faser Kohlenstofffaser ist.

5. 3D-Drucksystem zum Drucken eines Objekts (1) aus einem thermoplastischen Material, verstärkt mit einem durchgehenden elektrisch leitfähigen Faserfilament (2), nach einem der vorhergehenden Ansprüche 1-3, wobei die elektrisch leitfähige Faser eine elektrisch leitfähige Beschichtung umfasst.

**Revendications**

1. Système d'impression tridimensionnelle destiné à imprimer un objet (1) à partir d'un filament de matériau thermoplastique renforcé avec une fibre électriquement conductrice continue (2), le système d'impression comprenant :

- un lit d'impression (3) où un matériau imprimé est déposé pour former l'objet (1),
- une bobine (4) supportant un filament (2) de matériau thermoplastique renforcé avec une fibre électriquement conductrice continue,
- une tête d'impression (5) configurée pour être alimentée par le matériau thermoplastique renforcé avec une fibre électriquement conductrice continue depuis la bobine (4) et pour déposer le matériau imprimé sur le lit d'impression (3),
- une alimentation électrique (6),
- une paire de première et deuxième électrodes (7, 8) reliées à l'alimentation électrique (6),
- la deuxième électrode (8) étant reliée électriquement au matériau thermoplastique renforcé avec une fibre électriquement conductrice continue,
**caractérisé en ce que** la première électrode (7) est reliée électriquement au lit d'impression (3), de telle sorte qu'un circuit électrique est créé à travers la fibre continue du matériau thermoplastique pour chauffer le matériau imprimé.

2. Système d'impression tridimensionnelle destiné à imprimer un objet (1) à partir d'un filament de matériau thermoplastique renforcé avec une fibre électriquement conductrice continue (2), selon la revendication 1, dans lequel la deuxième électrode (8) est reliée électriquement à la tête d'impression (5), la tête d'impression (5) étant configurée pour être reliée électriquement au filament de matériau thermoplastique renforcé avec une fibre électriquement conductrice continue (2).

3. Système d'impression tridimensionnelle destiné à imprimer un objet (1) à partir d'un filament de matériau thermoplastique renforcé avec une fibre électriquement conductrice continue (2), selon la revendication 1, dans lequel la deuxième électrode (8) est reliée électriquement à la bobine (4), la bobine (4) étant configurée pour être reliée électriquement au filament de matériau thermoplastique renforcé avec une fibre électriquement conductrice continue (2).

4. Système d'impression tridimensionnelle destiné à imprimer un objet (1) à partir d'un filament de matériau thermoplastique renforcé avec une fibre électriquement conductrice continue (2), selon une quelconque revendication précédente, dans lequel la fibre électriquement conductrice est une fibre de carbone.

5. Système d'impression tridimensionnelle destiné à imprimer un objet (1) à partir d'un filament de matériau thermoplastique renforcé avec une fibre électriquement conductrice continue (2), selon l'une quelconque des revendications 1 à 3, dans lequel la fibre électriquement conductrice comprend un revête-

ment électriquement conducteur.

FIG.1

EP 3 819 099 B1

FIG.2

**EP 3 819 099 B1**

**Patent documents cited in the description**

- US 2017129170 A1